# EUROPEAN PATENT APPLICATION

(11) **EP 4 507 423 A1**
(43) Date of publication of application: **12.02.2025**
(21) Application number: 22945654.6
(22) Date of filing: 29.12.2022
(51) Int. Cl.: H04W 72/04

(54) **CHANNEL SOUNDING REFERENCE SIGNAL RESOURCE REALLOCATION METHOD, BASE STATION, AND STORAGE MEDIUM**

(30) Priority: 07.06.2022 CN 202210636994
(71) Applicant: ZTE Corporation, Shenzhen, Guangdong 518057 (CN)
(72) Inventor: WEI, Zhongkun, Shenzhen, Guangdong 518057 (CN)
(74) Representative: Cristinelli, Luca
(86) International application number: PCT/CN2022/143326
(87) International publication number: WO 2023/236526

(57) **Abstract**

Embodiments of the present invention relate to the field of wireless communications, and provide a channel sounding reference signal (SRS) resource reallocation method, a device, and a storage medium. The method comprises: when it is acquired that there is at least one target carrier that is not allocated SRS resources among multiple carriers corresponding to a user terminal, acquiring first SRS resource allocation information of a base station and second SRS resource allocation information of the multiple carriers; and then accurately allocating SRS resources to the target carrier according to the first SRS resource allocation information and the second SRS resource allocation information.

## Description

### Cross-Reference to Related Application

The present disclosure claims priority to Chinese Patent Application No. CN202210636994.0, filed on June 07, 2022 and entitled "Channel Sounding Reference Signal Resource Reallocation Method, Base Station, and Storage Medium", which is incorporated herein by reference in its entirety.

### Technical Field

The present disclosure relates to the technical field of wireless communications, and in particular to a sounding reference signal resource reallocation method, a base station, and a storage medium.

### Background

With the development of wireless communication technologies, users have higher demands for bandwidth speed. A 5^{th} Generation New Radio (5G NR) Carrier Aggregation (CA) technology aggregates multiple carriers together to provide terminals with a greater transmission bandwidth. Terminals may flexibly choose an appropriate number of carriers for data download or upload based on their capabilities, effectively improving the transmission speed in uplink and downlink directions.

### Summary

Embodiments of the present disclosure provide a sounding reference signal resource reallocation method, a base station, and a storage medium.

According to a first aspect of the embodiments of the present disclosure, provided is a sounding reference signal resource reallocation method, which is performed by a base station. The sounding reference signal resource reallocation method includes: in response to determining that at least one target carrier among multiple carriers corresponding to a user terminal is not allocated an SRS resource, acquiring first SRS resource allocation information of the base station and second SRS resource allocation information of the multiple carriers; and allocating an SRS resource to the target carrier according to the first SRS resource allocation information and the second SRS resource allocation information.

According to a second aspect of the embodiments of the present disclosure, provided is a base station. The base station includes a processor, a memory, a computer program stored on the memory and capable of being executed by the processor, and a data bus for implementing connection and communication between the processor and the memory, wherein the computer program, when being executed by the processor, causes the processor to implement the SRS resource reallocation method as provided in the description of the present disclosure.

According to a third aspect of the embodiments of the present disclosure, provided is a storage medium used for computer readable storage, wherein the storage medium stores one or more programs, and the one or more programs, when being executed by one or more processors, cause the one or more processors to implement the SRS resource reallocation method provided in the description of the present disclosure.

### Brief Description of the Drawings

Fig. 1 is a schematic flowchart of a sounding reference signal resource reallocation method according to some embodiments of the present disclosure;
Fig. 2 is a schematic flowchart of a sub-operation involved in the sounding reference signal resource reallocation method in Fig. 1;
Fig. 3 is a schematic diagram of a scenario of a sounding reference signal resource reallocation method according to some embodiments of the present disclosure;
Fig. 4 is a schematic diagram of another scenario of a sounding reference signal resource reallocation method according to some embodiments of the present disclosure;
Fig. 5 is a schematic diagram of still another scenario of a sounding reference signal resource reallocation method according to some embodiments of the present disclosure; and
Fig. 6 is a schematic block diagram of the structure of a base station according to some embodiments of the present disclosure.

### Detailed Description

The following clearly and completely describes the technical solutions in the embodiments of the present disclosure with reference to the accompanying drawings in the embodiments of the present disclosure. Apparently, the embodiments to be described are merely a part rather than all of the embodiments of the present disclosure. All other embodiments acquired by those having ordinary skill in the art based on the embodiments of the present disclosure without creative efforts shall fall within the scope of protection of the present disclosure.

The flow charts shown in the figures are merely illustrative, do not necessarily include all of the content and operations/steps, nor do they necessarily have to be performed in the described order. For example, some operations/steps may be broken down, combined, or partially combined, and thus the order of actual execution may vary as desired.

It should be understood that the terminology used in the description of the present disclosure is for the purpose of describing particular embodiments only and is not intended to be limiting of the disclosure. As used in this description and the appended claims, the singular forms "a", "an", and "the" are intended to include the plural forms as well, unless the context clearly indicates otherwise.

In a scenario of 5G NR carrier aggregation, a base station needs to allocate Sounding Reference Signal (SRS) resources to a primary carrier and a secondary carrier of a terminal to improve the accuracy of channel estimation for the primary carrier and the secondary carrier, thereby enhancing the radio air interface performance. However, SRS resources of the base station are limited and cannot guarantee that each carrier is allocated an SRS resource when each terminal accesses. Therefore, how to reallocate SRS resources to one or more carriers that have not been allocated SRS resources when the terminal initially accesses is currently an urgent problem to be solved.

A sounding reference signal resource reallocation method, a base station and a storage medium are provided. The sounding reference signal resource reallocation method may be performed by a base station. The base station may be a base station such as a macro base station, a micro base station, or a repeater. For example, the base station may be a macro base station, and when determining that at least one target carrier among multiple carriers corresponding to a user terminal is not allocated an SRS resource, the macro base station acquires first SRS resource allocation information of the base station and second SRS resource allocation information of the multiple carriers, and allocates an SRS resource to the target carrier according to the first SRS resource allocation information and the second SRS resource allocation information.

Some embodiments of the present disclosure will be described in detail below with reference to the accompanying drawings. The following embodiments and features in the embodiments may be combined with each other if there is no conflict.

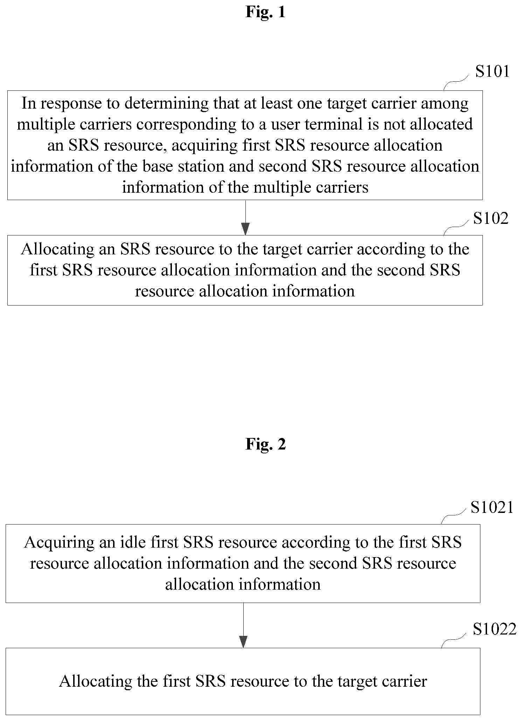

Please refer to Fig. 1, Fig. 1 is a schematic flowchart of a sounding reference signal resource reallocation method according to some embodiments of the present disclosure.

As shown in Fig. 1, the sounding reference signal resource reallocation method includes operations S101 to S102.

At operation S101, in response to determining that at least one target carrier among multiple carriers corresponding to a user terminal is not allocated an SRS resource, first SRS resource allocation information of the base station and second SRS resource allocation information of the multiple carriers are acquired.

The above mentioned carrier/carriers may be carrier/carriers generated by performing Carrier Aggregation (CA) on a plurality of communication carriers during communication between the user terminal and the base station. The carrier/carriers may include a primary carrier and a secondary carrier. The user terminal may be selected according to an actual situation, which is not specifically limited in the embodiments of the present disclosure. For example, the user terminal may be a terminal device such as a mobile phone, a desktop computer, a notebook computer, and an intelligent wearable device.

It should be noted that the SRS resource is a resource for transmitting an SRS and allocated to a carrier by a base station, and when the base station allocates the SRS resource to the carrier, the carrier transmits an SRS to the base station based on the SRS resource, so that the base station detects location information and channel quality information of a user terminal according to the SRS transmitted by the carrier, and the base station may further adjust a transmission channel of the user terminal according to the location information and the channel quality information of the user terminal, so that air interface performance may be improved, and user experience may be further improved.

In some embodiments, when it is determined that at least one carrier among multiple carriers corresponding to a user terminal is not allocated an SRS resource, the at least one carrier to which no SRS resource is allocated may be determined as the at least one target carrier. By determining whether each carrier corresponding to the user terminal is allocated an SRS resource, it may be further accurately determined whether the carrier is a target carrier.

In some embodiments, whether the multiple carriers corresponding to the user terminal are not allocated an SRS resource may be detected at a preset time interval; when it is determined that there is a carrier not allocated an SRS resource (i.e., a carrier to which an SRS resource is not allocated) in the multiple carriers, a timer corresponding to this carrier is started for timing; and when a timing duration of the timer reaches a preset duration, the carrier not allocated the SRS resource is determined as a target carrier. The preset time interval and the preset duration may be set according to actual situations, which is not specifically limited in the embodiments of the present disclosure. For example, the preset time interval may be set as 2 minutes, and the preset duration may be set as 5 minutes. By detecting whether the multiple carriers corresponding to the user terminal are not allocated an SRS resource may be detected at a preset time interval, the number of times that the base station detects whether the carrier is a carrier to which an SRS resource is not allocated can be reduced, so as to reduce the operating pressure on the base station. By starting a timer for a carrier to which an SRS resource is not allocated, the number of cycles of SRS resource reconfiguration may be reduced, so as to reduce the operating pressure on the base station.

In some embodiments, in response to determining that at least one target carrier is not allocated an SRS resource, first SRS resource allocation information of the base station and second SRS resource allocation information of the multiple carriers are acquired. The first SRS resource allocation information includes an SRS transmission time point corresponding to each SRS resource in the base station and a carrier to which the each SRS resource is allocated, and the second SRS resource allocation information includes an SRS transmission time point corresponding to an SRS resource allocated to each carrier and the carrier to which each SRS resource is allocated.

At operation S102, an SRS resource is allocated to the target carrier according to the first SRS resource allocation information and the second SRS resource allocation information.

There may be one target carrier, or there may be two target carriers. When there is only one target carrier, the target carrier may be a primary carrier or a secondary carrier. When there are two target carriers, the target carriers may include both a primary carrier and a secondary carrier.

In some embodiments, as shown in Fig. 2, the operation S102 may include sub-operations S1021 to S1022.

At sub-operation S1021, an idle first SRS resource is acquired according to the first SRS resource allocation information and the second SRS resource allocation information.

The first SRS resource allocation information includes an SRS transmission time point corresponding to each SRS resource, and the second SRS resource allocation information includes an SRS transmission time point corresponding to an SRS resource allocated to each of the multiple carriers. Whether there is an idle SRS resource whose SRS transmission time point differs from the SRS transmission time point corresponding to the SRS resource allocated to each of the multiple carriers is determined according to the SRS transmission time point corresponding to each SRS resource and the SRS transmission time point corresponding to the SRS resource allocated to each of the multiple carriers; and in response to determining that there is the idle SRS resource whose SRS transmission time point differs from the SRS transmission time point corresponding to the SRS resource allocated to each of the multiple carriers, the idle SRS resource is acquired and determined as the first SRS resource. By means of querying an SRS resource of which an SRS transmission time point differs from an SRS transmission time point corresponding to an SRS resource allocated to each carrier, an idle SRS resource complying with requirements may be accurately queried, thereby greatly improving the efficiency and accuracy of SRS resource reallocation.

In some embodiments, whether there are multiple idle SRS resources whose SRS transmission time points differ from the SRS transmission time point corresponding to the SRS resource allocated to each of the multiple carriers is determined according to the SRS transmission time point corresponding to each SRS resource and the SRS transmission time point corresponding to the SRS resource allocated to each of the multiple carriers; and in response to determining that there are multiple idle SRS resources whose SRS transmission time points differ from the SRS transmission time point corresponding to the SRS resource allocated to each of the multiple carriers, the multiple idle SRS resources are acquired, an SRS transmission period corresponding to each of the multiple idle SRS resources is determined, and an idle SRS resource corresponding to a minimum SRS transmission period is selected from the multiple idle SRS resources as the first SRS resource. By selecting an SRS resource with a minimum SRS transmission period, the frequency of transmitting the SRS may be increased, so that the base station may measure the channel quality more accurately.

At sub-operation S 1022, the first SRS resource is allocated to the target carrier.

When an idle first SRS resource is acquired, the first SRS resource is allocated to the target carrier so as to complete the reallocation of the SRS resource to the target carrier. By allocating the first SRS resource to the target carrier, the reallocation of the SRS resource to the target carrier may be completed accurately, and the accuracy of the base station measuring the channel quality of the user terminal may be greatly improved.

In some embodiments, in response to determining that there is no idle SRS resource whose SRS transmission time point differs from the SRS transmission time point corresponding to the SRS resource allocated to each of the multiple carriers, an idle second SRS resource is acquired, wherein the SRS transmission time point corresponding to the second SRS resource is the same as the SRS transmission time point corresponding to the SRS resource allocated to at least one of the multiple carriers; whether there is an idle third SRS resource is determined, wherein the SRS transmission time point corresponding to the third SRS resource differs from the SRS transmission time point corresponding to the second SRS resource and the SRS transmission time point corresponding to the SRS resource allocated to each of the multiple carriers; in response to determining that there is the idle third SRS resource, the third SRS resource is acquired; and the second SRS resource is allocated to the target carrier, and the third SRS resource is allocated to a carrier whose SRS transmission time point is the same as the SRS transmission time point corresponding to the second SRS resource. When there is no idle first SRS resource, whether there is an idle second SRS resource and whether there is an idle third SRS resource are determined, wherein the SRS transmission time points corresponding to the second SRS resource and the third SRS resource are different; when there are the second SRS resource and the third SRS resource, the second SRS resource is allocated to the target carrier, and the third SRS resource is allocated to a carrier with the same SRS transmission time point as the SRS transmission time point corresponding to the second SRS resource, thus, the problem that the SRS transmission time point corresponding to the second SRS resource is the same as the SRS transmission time point corresponding to the allocated SRS resource is solved, and the reallocation of the SRS resource to the target carrier is accurately conducted, thereby greatly improving the accuracy of channel quality measurement of a user terminal by a base station.

In some embodiments, the manner for acquiring the second SRS resource may be: in a case where there are multiple idle SRS resources, an SRS transmission period corresponding to each of the multiple idle SRS resources is determined, and an idle SRS resource corresponding to a maximum SRS transmission period is selected from the multiple idle SRS resources as the second SRS resource according to the SRS transmission period corresponding to each SRS resource. By selecting the SRS resource corresponding to the maximum SRS transmission period as the second SRS resource, the success probability of finding the third SRS resource may be improved, and the success rate of reallocating the SRS resource to the target carrier may be improved.

In some embodiments, the manner for acquiring the third SRS resource may be: in a case where there are multiple idle SRS resources, an SRS transmission period corresponding to each of the multiple idle SRS resources is determined, the SRS transmission periods corresponding to the multiple idle SRS resources are ranked in an ascending order, and an idle SRS resource corresponding to a minimum SRS transmission period that is different from the SRS transmission period corresponding to the second SRS resource is selected from the multiple idle SRS resources as the third SRS resource. By selecting, according to the SRS transmission periods, an idle SRS resource corresponding to a minimum SRS transmission period that is different from the SRS transmission period corresponding to the second SRS resource, the frequency of SRS transmission may be improved, and the base station may measure the channel quality more accurately.

In some embodiments, in response to determining that there is no first SRS resource, and there is no second SRS resource or no third SRS resource, it may be determined that SRS resource reallocation for the target carrier fails, and the SRS resource reallocation is ended. When the first SRS resource, the second SRS resource or the third SRS resource complying with the corresponding requirements cannot be found through the query, it may be determined that the SRS resource reallocation for the target carrier fails, the SRS resource reallocation flow is ended, a timer corresponding to the target carrier is set, and when a timing duration of the timer reaches a preset duration, the SRS resource configuration is re-performed.

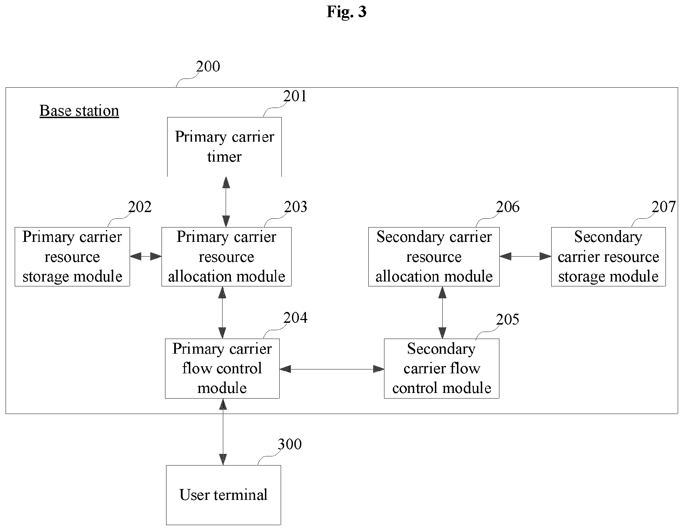

Exemplarily, as shown in Fig. 3, a carrier corresponding to a user terminal includes a primary carrier and a secondary carrier, and a base station 200 includes a primary carrier timer 201, a primary carrier resource storage module 202, a primary carrier resource allocation module 203, a primary carrier flow control module 204, a secondary carrier resource storage module 207, a secondary carrier resource allocation module 206 and a secondary carrier flow control module 205. When the target carrier is a primary carrier, the primary carrier timer 201 corresponding to the target carrier is started for timing. When a timing duration of the primary carrier timer 201 reaches a preset duration, the primary carrier resource allocation module 203 acquires first SRS resource allocation information from the primary carrier resource storage module 202, and also acquires second SRS resource allocation information of the secondary carrier from the primary carrier resource storage module 202. The primary carrier resource allocation module 203 determines, according to an SRS transmission time point corresponding to each SRS resource and an SRS transmission time point corresponding to an SRS resource allocated to each carrier, whether there is an idle SRS resource with the SRS transmission time point different from the SRS transmission time point corresponding to the SRS resource allocated to each carrier; and in a case where there is an idle SRS resource with the SRS transmission time point different from the SRS transmission time point corresponding to the SRS resource allocated to each carrier, acquires the idle SRS resource and determines the idle SRS resource as a first SRS resource. The primary carrier resource allocation module 203 sends information of the first SRS resource to the primary carrier flow control module 204 and the primary carrier resource storage module 202. The primary carrier flow control module 204 allocates the first SRS resource to the primary carrier of the UE 300. The primary carrier resource storage module 202 stores information regarding allocation of the first SRS resource to the primary carrier of the UE 300.

In a case where there is no idle SRS resource with the SRS transmission time point different from the SRS transmission time point corresponding to the SRS resource allocated to each carrier, the primary carrier resource allocation module 203 acquires an idle second SRS resource, wherein an SRS transmission time point corresponding to the second SRS resource is the same as an SRS transmission time point corresponding to an SRS resource allocated to at least one carrier. The primary carrier resource allocation module 203 sends information of the second SRS resource to the primary carrier flow control module 204. The primary carrier flow control module 204 sends the received information of the second SRS resource to the secondary carrier flow control module 205. The secondary carrier flow control module 205 sends the received information of the second SRS resource to the secondary carrier resource allocation module 206. The secondary carrier resource allocation module 206 acquires the first SRS resource allocation information from the secondary carrier resource storage module 207, determines whether there is an idle third SRS resource according to the first SRS resource allocation information and the information of the second SRS resource, wherein an SRS transmission time point corresponding to the third SRS resource differs from the SRS transmission time point corresponding to the second SRS resource and the SRS transmission time point corresponding to the SRS resource allocated to each carrier; and in a case where there is an idle third SRS resource, sends information of the third SRS resource to the secondary carrier flow control module 205. The secondary carrier flow control module 205 sends the received information of the third SRS resource to the primary carrier flow control module 204. The primary carrier flow control module 204 allocates the third SRS resource to the secondary carrier according to the information of the third SRS resource. The primary carrier resource storage module 202 and the secondary carrier resource storage module 207 store information regarding allocation of the second SRS resource to the primary carrier of the UE 300 and information regarding allocation of the third SRS resource to the secondary carrier of the UE 300.

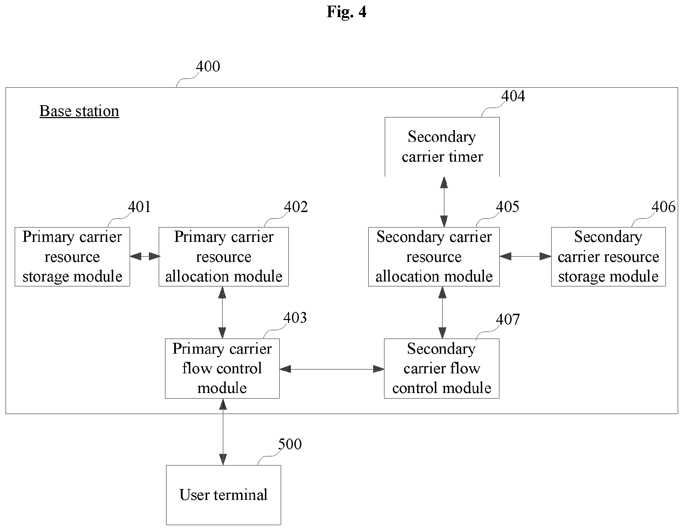

Exemplarily, as shown in Fig. 4, a carrier corresponding to a user terminal includes a primary carrier and a secondary carrier, and a base station 400 includes a primary carrier resource storage module 401, a primary carrier resource allocation module 402, a primary carrier flow control module 403, a secondary carrier timer 404, a secondary carrier resource allocation module 405, a secondary carrier resource storage module 406, and a secondary carrier flow control module 407. When the target carrier is a secondary carrier, the secondary carrier timer 404 is started for timing. When a timing duration of the secondary carrier timer 404 reaches a preset duration, the secondary carrier resource allocation module 405 acquires first SRS resource allocation information from the secondary carrier resource storage module 406, and also acquired second SRS resource allocation information of the primary carrier from the secondary carrier resource storage module 406. The secondary carrier resource allocation module 405 determines, according to an SRS transmission time point corresponding to each SRS resource and an SRS transmission time point corresponding to an SRS resource allocated to each carrier, whether there is an idle SRS resource with an SRS transmission time point different from the SRS transmission time point corresponding to the SRS resource allocated to each carrier. In a case where there is an idle SRS resource with an SRS transmission time point different from the SRS transmission time point corresponding to the SRS resource allocated to each carrier, the secondary carrier resource allocation module 405 acquires the idle SRS resource, and determines the idle SRS resource as a first SRS resource. The secondary carrier resource allocation module 405 sends information of the first SRS resource to the secondary carrier flow control module 407 and the secondary carrier resource storage module 406. The secondary carrier flow control module 407 allocates the first SRS resource to the secondary carrier of a user terminal 500. The secondary carrier resource storage module 406 stores information regarding allocation of the first SRS resource to the secondary carrier of the user terminal 500.

In a case where there is no idle SRS resource with an SRS transmission time point different from the SRS transmission time point corresponding to the SRS resource allocated to each carrier, the secondary carrier resource allocation module 405 acquires an idle second SRS resource, wherein an SRS transmission time point corresponding to the second SRS resource is the same as an SRS transmission time point corresponding to an SRS resource allocated to at least one carrier. The secondary carrier resource allocation module 405 sends information of the second SRS resource to the secondary carrier flow control module 407. The secondary carrier flow control module 407 sends the received information of the second SRS resource to the primary carrier flow control module 403. The primary carrier flow control module 403 sends the received information of the second SRS resource to the primary carrier resource allocation module 402. The primary carrier resource allocation module 402 acquires the first SRS resource allocation information from the primary carrier resource storage module 401, and determines whether there is an idle third SRS resource according to the first SRS resource allocation information and the information of the second SRS resource, wherein an SRS transmission time point corresponding to the third SRS resource differs from the SRS transmission time point corresponding to the second SRS resource and the SRS transmission time point corresponding to the SRS resource allocated to each carrier. In a case where there is an idle third SRS resource, the primary carrier resource allocation module 402 sends information of the third SRS resource to the primary carrier flow control module 403. The primary carrier flow control module 403 allocates the third SRS resource to the secondary carrier. The primary carrier resource storage module 401 and the secondary carrier resource storage module 406 store information regarding allocation of the second SRS resource to the secondary carrier of the user terminal 500 and information regarding allocation of the third SRS resource to the primary carrier of the user terminal 500.

In some embodiments, when it is determined that there are two target carriers, an idle fourth SRS resource is acquired, and the fourth SRS resource is allocated to a first target carrier of the two target carriers; and an SRS resource is allocated to a second target carrier of the two target carriers according to the first SRS resource allocation information and an SRS transmission time point corresponding to the fourth SRS resource. It should be noted that, the manner of allocating the SRS resource to the second target carrier according to the first SRS resource allocation information and the SRS transmission time point corresponding to the fourth SRS resource is the same as the SRS resource reallocation method when there is one target carrier, therefore, for the manner of allocating the SRS resource to the second target carrier according to the first SRS resource allocation information and the SRS transmission time point corresponding to the fourth SRS resource, reference may be made to the SRS resource reallocation method when there is one target carrier, no further description will be given here. When there are two target carriers, an SRS resource is allocated to the first target carrier first, and then an SRS resource is allocated to the second target carrier, so that the efficiency and accuracy of reallocating an SRS resource to a target carrier may be improved.

In some embodiments, the manner for acquiring the idle fourth SRS resource may be: a time stamp when each target carrier initiates SRS resource reallocation is acquired; according to the time stamp when each carrier initiates the SRS resource reallocation, a target carrier which initiates the SRS resource reallocation earliest is determined as the first target carrier, and the fourth SRS resource is allocated to the first target carrier. The first target carrier may be accurately determined by using the time stamp for initiating the SRS resource reallocation for each target carrier, thereby improving the efficiency of reallocating the SRS resource to the target carrier.

In some embodiments, after the SRS resource is allocated to the target carrier according to the first SRS resource allocation information and the second SRS resource allocation information, the first SRS resource allocation information is updated according to the SRS resource allocated to the target carrier. By updating the first SRS resource allocation information, the efficiency and accuracy of subsequently reallocating an SRS resource to a target carrier may be improved.

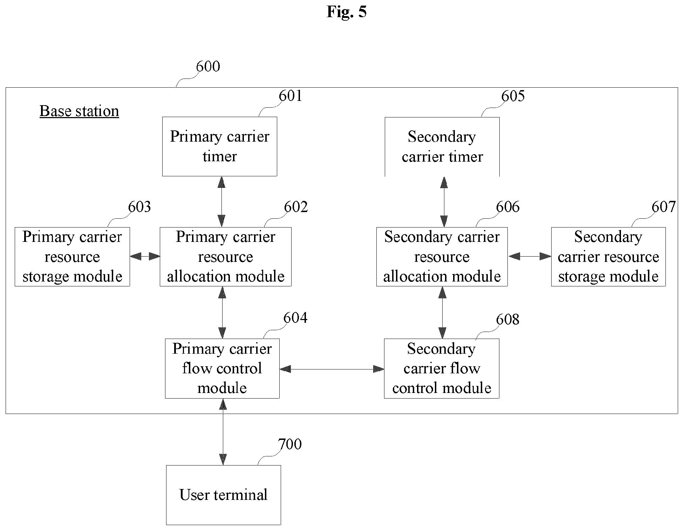

Exemplarily, as shown in Fig. 5, a carrier corresponding to a user terminal includes a primary carrier and a secondary carrier, and a base station 600 includes a primary carrier timer 601, a primary carrier resource allocation module 602, a primary carrier resource storage module 603, a primary carrier flow control module 604, a secondary carrier timer 605, a secondary carrier resource allocation module 606, a secondary carrier resource storage module 607, and a secondary carrier flow control module 608. When both the primary carrier and the secondary carrier are target carriers, time stamps when the primary carrier and the secondary carrier initiate SRS resource reallocation are acquired, a carrier with an earlier time stamp of initiating the SRS resource reallocation is determined as a first target carrier, for example, the time stamp when the primary carrier initiates the SRS resource reallocation is 05: 10: 30 on January, 10 2022, and the time stamp when the secondary carrier initiates the SRS resource reallocation is 05: 10: 50 on January, 10 2022, then the primary carrier is determined as the first target carrier. A respective timer corresponding to each carrier is started to perform timing when the primary carrier and the secondary carrier initiate the SRS resource reallocation, when a timing duration of the timer is longer than a preset duration, the primary carrier resource allocation module 602 acquires first SRS resource allocation information from the primary carrier resource storage module 603, acquires information of an idle fourth SRS resource information according to the first SRS resource allocation information, and sends information of the fourth SRS resource to the primary carrier flow control module 604. The primary carrier flow control module 604 allocates the fourth SRS resource to the primary carrier of the UE according to the information of the fourth SRS resource. After the fourth SRS resource is allocated to the primary carrier, an SRS resource is allocated to the secondary carrier according to the first SRS resource allocation information and the information of the fourth SRS resource allocated to the primary carrier. The manner for allocating the SRS resource to the secondary carrier according to the first SRS resource allocation information and the information of the fourth SRS resource allocated to the primary carrier may refer to the manner for allocating the SRS resource to the secondary carrier according to the first SRS resource allocation information and the second SRS resource allocation information of the primary carrier adopted when the foregoing target carrier is the secondary carrier, and therefore the manner for allocating the SRS resource to the secondary carrier according to the first SRS resource allocation information and the information of the fourth SRS resource allocated to the primary carrier will not be repeated herein.

According to the sounding reference signal resource reallocation method, in response to determining that at least one target carrier among multiple carriers corresponding to a user terminal is not allocated an SRS resource, first SRS resource allocation information of the base station and second SRS resource allocation information of the multiple carriers are acquired, and then an SRS resource is accurately allocated to the target carrier according to the first SRS resource allocation information and the second SRS resource allocation information. By means of the solution, an SRS resource can be reallocated in time to each carrier which is not allocated an SRS resource, thereby greatly improving a measurement result of an SRS channel and improving the utilization rate of the SRS resource, so as to reduce the waste of resources.

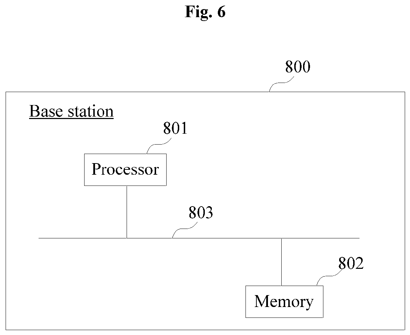

Please refer to Fig. 6, Fig. 6 is a schematic block diagram of the structure of a base station according to some embodiments of the present disclosure.

As shown in Fig. 6, a base station 800 includes a processor 801 and a memory 802, where the processor 801 and the memory 802 are connected by using a bus 803, and the bus is, for example, an Inter-integrated Circuit (I2C) bus.

The processor 801 is configured to provide calculation and control capabilities and support running of the whole base station. The processor 801 may be a Central Processing Unit (CPU), and may also be other processor, such as a general purpose processor, a Digital Signal Processor (DSP), an Application Specific Integrated (ASIC), a Field-Programmable Gate Array (FPGA), or another programmable logic device, a discrete gate or transistor logic device, a discrete hardware component, or the like. The general purpose processor may be a microprocessor, or any conventional processor.

The memory 802 may be a flash chip, a Read-Only Memory (ROM) disk, an optical disk, a U disk, a removable hard disk, or the like.

Those having ordinary skill in the art would understand that the structure shown in Fig. 6 is only a partial block structure related to the solution of the present disclosure, and does not limit the base station to which the solution of the present disclosure is applied. The base station may include more or fewer components than what are shown in the figure, or combine some components, or have different component arrangements.

The processor is configured to run a computer program stored in the memory, and implement any one of the sounding reference signal resource reallocation methods provided in the embodiments of the present disclosure when executing the computer program.

In some embodiments, the processor is configured to run a computer program stored in the memory, and implement the following operations when executing the computer program: in response to determining that at least one target carrier among multiple carriers corresponding to a user terminal is not allocated an SRS resource, first SRS resource allocation information of the base station and second SRS resource allocation information of the multiple carriers are acquired; and an SRS resource is allocated to the target carrier according to the first SRS resource allocation information and the second SRS resource allocation information.

In some embodiments, the processor, when allocating an SRS resource to the target carrier according to the first SRS resource allocation information and the second SRS resource allocation information, may be configured to: acquire an idle first SRS resource according to the first SRS resource allocation information and the second SRS resource allocation information; and allocate the first SRS resource to the target carrier.

In some embodiments, the first SRS resource allocation information includes an SRS transmission time point corresponding to each SRS resource, and the second SRS resource allocation information includes an SRS transmission time point corresponding to an SRS resource allocated to each of the multiple carriers; and the processor, when acquiring an idle first SRS resource according to the first SRS resource allocation information and the second SRS resource allocation information, may be configured to: determine, according to the SRS transmission time point corresponding to each SRS resource and the SRS transmission time point corresponding to the SRS resource allocated to each of the multiple carriers, whether there is an idle SRS resource whose SRS transmission time point differs from the SRS transmission time point corresponding to the SRS resource allocated to each of the multiple carriers; and in response to determining that there is the idle SRS resource whose SRS transmission time point differs from the SRS transmission time point corresponding to the SRS resource allocated to each of the multiple carriers, acquire the idle SRS resource, and determine the idle SRS resource as the first SRS resource.

In some embodiments, the processor, after determining whether there is an idle SRS resource whose SRS transmission time point differs from the SRS transmission time point corresponding to the SRS resource allocated to each of the multiple carriers, is further configured to: in response to determining that there is no idle SRS resource whose SRS transmission time point differs from the SRS transmission time point corresponding to the SRS resource allocated to each of the multiple carriers, acquire an idle second SRS resource, wherein the SRS transmission time point corresponding to the second SRS resource is the same as the SRS transmission time point corresponding to the SRS resource allocated to at least one of the multiple carriers; determine whether there is an idle third SRS resource, wherein the SRS transmission time point corresponding to the third SRS resource differs from the SRS transmission time point corresponding to the second SRS resource and the SRS transmission time point corresponding to the SRS resource allocated to each of the multiple carriers; in response to determining that there is the idle third SRS resource, acquire the third SRS resource; and allocate the second SRS resource to the target carrier, and allocate the third SRS resource to a carrier whose SRS transmission time point is the same as the SRS transmission time point corresponding to the second SRS resource.

In some embodiments, the processor is further configured to: in response to determining that there is no first SRS resource, and there is no second SRS resource or no third SRS resource, determine that SRS resource reallocation for the target carrier fails, and ending the SRS resource reallocation.

In some embodiments, the processor, when allocating an SRS resource to the target carrier according to the first SRS resource allocation information and the second SRS resource allocation information, may be configured to: in response to determining that there are two target carriers, acquire an idle fourth SRS resource, and allocate the fourth SRS resource to a first target carrier of the two target carriers; and allocate an SRS resource to a second target carrier of the two target carriers according to the first SRS resource allocation information and an SRS transmission time point corresponding to the fourth SRS resource.

In some embodiments, the processor, when allocating the fourth SRS resource to a first target carrier of the two target carriers, may be configured to: acquire a time stamp when each of the two target carriers initiates SRS resource reallocation; and determine, according to the time stamp when each of the two target carriers initiates the SRS resource reallocation, a target carrier which initiates the SRS resource reallocation earliest as the first target carrier, and allocate the fourth SRS resource to the first target carrier.

In some embodiments, after allocating an SRS resource to the target carrier according to the first SRS resource allocation information and the second SRS resource allocation information, the processor is further configured to: update the first SRS resource allocation information according to the SRS resource allocated to the target carrier.

It should be noted that, those having ordinary skill in the art may clearly understand that, for the purpose of convenient and brief description, for an operating process of the base station described in the foregoing, reference may be made to a corresponding process in the foregoing method embodiments for sounding reference signal resource reallocation, and details are not repeatedly described herein.

The embodiments of the present disclosure further provide a storage medium, which is used for computer readable storage. The storage medium stores one or more programs. The one or more programs may be executed by one or more processors, so as to implement operations of any sounding reference signal resource reallocation method provided in the description of the present disclosure.

The storage medium may be an internal storage unit of the base station in the foregoing embodiment, for example, a hard disk or a memory of the base station. The storage medium may also be an external storage device of the base station, for example, a plug-in hard disk, a Smart Media Card (SMC), a Secure Digital (SD) card, and a Flash Card that are equipped on the base station.

Those having ordinary skill in the art can appreciate that all or some of the operations of the methods disclosed above, and the functional blocks/units in the systems and apparatuses may be implemented as software, firmware, hardware, and any suitable combination thereof. In a hardware implementation, the division between functional modules/units referred to in the above description does not necessarily correspond to the division of physical components. For example, one physical component may have multiple functions, or one function or operation may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include computer storage media (or non-transitory media) and communication media (or transitory media). As is well known to those having ordinary skill in the art, the term computer storage media includes both volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, Digital Versatile Discs (DVD) or other optical disk storage, magnetic cassettes, magnetic tape, magnetic disk storage or other magnetic storage devices, or any other medium which can be used to store the desired information and which can be accessed by a computer. In addition, as is known to those having ordinary skill in the art, communication media typically embodies computer readable instructions, data structures, program modules, or other data in a modulated data signal such as a carrier wave or other transport mechanism and may include any information delivery media.

A sounding reference signal resource reallocation method, a base station and a storage medium are provided in the embodiments of the present disclosure. In the embodiments of the present disclosure, in response to determining that at least one target carrier among multiple carriers corresponding to a user terminal is not allocated an SRS resource, first SRS resource allocation information of the base station and second SRS resource allocation information of the multiple carriers are acquired, and then an SRS resource is accurately allocated to the target carrier according to the first SRS resource allocation information and the second SRS resource allocation information. By means of the solution, an SRS resource can be reallocated in time to each carrier which is not allocated an SRS resource, thereby greatly improving a measurement result of an SRS channel and improving the utilization rate of the SRS resource, so as to reduce the waste of resources.

It should be understood that the term "and/or" as used in this description and the appended claims refers to, and includes, any and all possible combinations of one or more of the items listed in association. It should be noted that, in this specification, the terms "include", "include", or any other variation thereof are intended to cover a non-exclusive inclusion, so that a process, a method, an article, or a system that includes a series of elements not only includes those elements, but also includes other elements that are not explicitly listed, or further includes inherent elements of the process, the method, the article, or the system. An element limited by "including a ......" does not exclude that there are other same elements in the process, method, article, or system that includes the element, unless there are more limitations.

The serial numbers of the embodiments of the present disclosure are only for description, and do not represent the preference of the embodiments. The foregoing descriptions are merely specific implementations of the present disclosure, but are not intended to limit the scope of protection of the present disclosure. Any equivalent modification or replacement readily figured out by those having ordinary skill in the art within the technical scope disclosed in the present disclosure shall belong to the scope of protection of the present disclosure. Therefore, the scope of protection of the present disclosure shall be subject to the scope of protection of the claims.

## Claims

1. A Sounding Reference Signal, SRS, resource reallocation method, performed by a base station and comprising:
in response to determining that at least one target carrier among multiple carriers corresponding to a user terminal is not allocated an SRS resource, acquiring first SRS resource allocation information of the base station and second SRS resource allocation information of the multiple carriers; and
allocating an SRS resource to the target carrier according to the first SRS resource allocation information and the second SRS resource allocation information.

2. The SRS resource reallocation method according to claim 1, wherein the allocating an SRS resource to the target carrier according to the first SRS resource allocation information and the second SRS resource allocation information comprises:
acquiring an idle first SRS resource according to the first SRS resource allocation information and the second SRS resource allocation information; and
allocating the first SRS resource to the target carrier.

3. The SRS resource reallocation method according to claim 2, wherein the first SRS resource allocation information comprises an SRS transmission time point corresponding to each SRS resource, and the second SRS resource allocation information comprises an SRS transmission time point corresponding to an SRS resource allocated to each of the multiple carriers; and
the acquiring an idle first SRS resource according to the first SRS resource allocation information and the second SRS resource allocation information comprises:
determining, according to the SRS transmission time point corresponding to each SRS resource and the SRS transmission time point corresponding to the SRS resource allocated to each of the multiple carriers, whether there is an idle SRS resource whose SRS transmission time point differs from the SRS transmission time point corresponding to the SRS resource allocated to each of the multiple carriers; and
in response to determining that there is the idle SRS resource whose SRS transmission time point differs from the SRS transmission time point corresponding to the SRS resource allocated to each of the multiple carriers, acquiring the idle SRS resource, and determining the idle SRS resource as the first SRS resource.

4. The SRS resource reallocation method according to claim 3, wherein after the determining whether there is an idle SRS resource whose SRS transmission time point differs from the SRS transmission time point corresponding to the SRS resource allocated to each of the multiple carriers, the SRS resource reallocation method further comprises:
in response to determining that there is no idle SRS resource whose SRS transmission time point differs from the SRS transmission time point corresponding to the SRS resource allocated to each of the multiple carriers, acquiring an idle second SRS resource, wherein the SRS transmission time point corresponding to the second SRS resource is the same as the SRS transmission time point corresponding to the SRS resource allocated to at least one of the multiple carriers;
determining whether there is an idle third SRS resource, wherein the SRS transmission time point corresponding to the third SRS resource differs from the SRS transmission time point corresponding to the second SRS resource and the SRS transmission time point corresponding to the SRS resource allocated to each of the multiple carriers;
in response to determining that there is the idle third SRS resource, acquiring the third SRS resource; and
allocating the second SRS resource to the target carrier, and allocating the third SRS resource to a carrier whose SRS transmission time point is the same as the SRS transmission time point corresponding to the second SRS resource.

5. The SRS resource reallocation method according to claim 4, further comprising:
in response to determining that there is no first SRS resource, and there is no second SRS resource or no third SRS resource, determining that SRS resource reallocation for the target carrier fails, and ending the SRS resource reallocation.

6. The SRS resource reallocation method according to claim 1, wherein the allocating an SRS resource to the target carrier according to the first SRS resource allocation information and the second SRS resource allocation information comprises:
in response to determining that there are two target carriers, acquiring an idle fourth SRS resource, and allocating the fourth SRS resource to a first target carrier of the two target carriers; and
allocating an SRS resource to a second target carrier of the two target carriers according to the first SRS resource allocation information and an SRS transmission time point corresponding to the fourth SRS resource.

7. The SRS resource reallocation method according to claim 6, wherein the allocating the fourth SRS resource to a first target carrier of the two target carriers comprises:
acquiring a time stamp when each of the two target carriers initiates SRS resource reallocation; and
determining, according to the time stamp when each of the two target carriers initiates the SRS resource reallocation, a target carrier which initiates the SRS resource reallocation earliest as the first target carrier, and allocating the fourth SRS resource to the first target carrier.

8. The SRS resource reallocation method according to claim 1, wherein after the allocating an SRS resource to the target carrier according to the first SRS resource allocation information and the second SRS resource allocation information, the SRS resource reallocation method further comprises:
updating the first SRS resource allocation information according to the SRS resource allocated to the target carrier.

9. A base station, comprising a processor, a memory, a computer program stored on the memory and capable of being executed by the processor, and a data bus for implementing connection and communication between the processor and the memory, wherein the computer program, when being executed by the processor, causes the processor to implement the SRS resource reallocation method according to any one of claims 1 to 8.

10. A storage medium used for computer readable storage, wherein the storage medium stores one or more programs, and the one or more programs, when being executed by one or more processors, cause the one or more processors to implement the SRS resource reallocation method according to any one of claims 1 to 8.
